# EUROPEAN PATENT APPLICATION

(11) **EP 2 902 889 A1**
(43) Date of publication of application: **05.08.2015**
(21) Application number: 15152443.6
(22) Date of filing: 26.01.2015
(51) Int. Cl.: G06F 3/041, G06F 3/0488

(54) **Touch-in-touch display apparatus**

(30) Priority: 30.01.2014 US 201461933779 P; 12.01.2015 US 201514595141
(71) Applicant: Samsung Display Co., Ltd., Gyeonggi-Do (KR)
(72) Inventor: Tian, Dihong, San Jose, CA 95112 (US); Kozintsev, Igor, San Jose, CA 95112 (US); Lu, Ning, San Jose,, CA 95112 (US)
(74) Representative: Dr. Weitzel & Partner

(57) **Abstract**

A display apparatus includes a touch controller configured to generate a touch event from a touch input, and the touch event corresponds to a first coordinate system of a first window. A touch-in-touch (TnT) display controller is coupled with the touch controller and configured to receive the touch event, and map the touch event from the first coordinate system to a second coordinate system of a second window.

## Description

### BACKGROUND

The present application relates to a touch sensor display apparatus. More particularly, it relates to a touch-in-touch display apparatus.

Picture-in-Picture (PiP) is a feature that can be found in many display devices. With PiP, a display device generates a smaller picture inset on a larger picture to create a final image for display. The sources for the two pictures may be provided from two different sources that are independent of each other. For example, the larger picture may be a signal output from a TV receiver whereas the smaller picture may be a signal output from a digital camera.

In devices such as smartphones, touch-screen displays have become prevalent and the size of the touch-screen displays continues to increase. Larger touch-screen displays have also become increasingly popular with tablet, laptop, and desktop computers, as well as TV sets. As the size of a touch-screen increases, however, it is not always convenient to operate using the entire area of the touch-screen.

The above information discussed in this Background section is only for enhancement of understanding of the background of the described technology and therefore it may contain information that does not constitute prior art that is already known to a person having ordinary skill in the art.

### SUMMARY

According to a first aspect a display apparatus is described. The display apparatus includes: a touch controller configured to generate a touch event from a touch input, the touch event corresponding to a first coordinate system of a first window; and a touch-in-touch (TnT) display controller coupled with the touch controller and configured to: receive the touch event, and map the touch event from the first coordinate system to a second coordinate system of a second window.

The TnT display controller may be further configured to: receive a first image corresponding to the second coordinate system, and map the first image from the second coordinate system to the first coordinate system.

The first image may be received from an application system coupled with the TnT display controller, and the TnT display controller may be further configured to: receive a second image from an image source corresponding to the second coordinate system, the image source being coupled with the TnT display controller, and provide the second image to the second window.

The mapping of the first image may include a two-dimensional affine transformation, and the mapping of the touch event may include an inverse affine transformation.

The two-dimensional affine transformation may include two-dimensional scaling and translation.

The second window may be a main window and the first window may be a TnT window within the main window of a display panel.

The TnT display controller may be collocated with the display panel.

The display apparatus may further include a touch sensor on a display panel, and a region of the touch sensor corresponding to the first window may have a higher sensitivity relative to the sensitivity of a region of the touch sensor corresponding to the second window.

According to a second aspect, a method for operating a display apparatus is described. The method may include: receiving, by a touch-in-touch (TnT) display controller, a touch event from a touch controller coupled with the TnT display controller, the touch controller being configured to generate the touch event from a touch input, the touch event corresponding to a first coordinate system of a first window; mapping, by the TnT display controller, the touch event from the first coordinate system to a second coordinate system of a second window; and providing the mapped touch event to an application system coupled with the TnT display controller.

The method may further include: receiving, by the TnT display controller, a first image corresponding to the second coordinate system; and mapping the first image from the second coordinate system to the first coordinate system.

The method may further include: receiving, by the TnT display controller, a second image from an image source corresponding to the second coordinate system, the image source being coupled with the TnT display controller; and providing, by the TnT display controller, the second image to the second window.

According to a third aspect, a display apparatus is further described. The display apparatus may include a touch controller configured to: generate a first touch event from a first touch input, the first touch event corresponding to a first coordinate system of a first window, and generate a second touch event from a second touch input, the second touch event corresponding to a second coordinate system of a second window; and a touch-in-touch (TnT) display controller coupled with the touch controller and configured to: receive the first touch event and the second touch event, map the first touch event from the first coordinate system to a third coordinate system of a third window, and map the second touch event from the second coordinate system to a third coordinate system of a third window.

The TnT display controller may be further configured to: receive a first image corresponding to the third coordinate system, receive a second image corresponding to the third coordinate system, map the first image from the third coordinate system to the first coordinate system, and map the second image from the third coordinate system to the second coordinate system.

The first image may be received from a first application system coupled with the TnT display controller, and the second image may be received from a second application system coupled with the TnT display controller, and the TnT display controller may be further configured to: receive a third image from an image source corresponding to the third coordinate system, the image source being coupled with the TnT display controller, and provide the third image to a third window.

The third window may be a main window of a display panel and the first window and the second window may be sub-areas within the main windows.

The TnT display controller may be further configured to prioritize the mapping of the first image and the second image based on the image that is first received by the TnT display controller.

### BRIEF DESCRIPTION OF THE DRAWINGS

The above and other aspects and features of the present invention will become apparent to those skilled in the art from the following detailed description of the example embodiments with reference to the accompanying drawings.
FIG. 1 shows an example of a user holding a smartphone in one hand with the image displayed within a sub-area of the display panel.
FIG. 2 shows a block diagram of a general architecture of display apparatus having a touch sensor display panel coupled to an application system.
FIG. 3 shows a block diagram of a general architecture of a display apparatus having a touch sensor display panel coupled to an application system and another image source.
FIG. 4 shows a block diagram of an example display apparatus with a touch-in-touch display controller according to an embodiment of the present invention.
FIG. 5 shows a graphical representation of an operation of a touch sensor and a touch controller with a touch-in-touch display controller according to an embodiment of the present invention.
FIGS. 6A-6B show block diagrams of example display apparatuses with a touch-in-touch display controller according to another embodiment of the present invention.

### DETAILED DESCRIPTION

Single-handed operation has become difficult with smartphones that have large touch-screen displays. To overcome the difficulty of single-handed operation of a large touch-screen display, a one-hand operation mode may be implemented, which when enabled shrinks the overall picture that is being displayed on the touch-screen display to a smaller-size window. This allows a user to conduct touch operation within the smaller-sized window, thus reducing the area in which the user has to reach (e.g., touch) with the fingers of a single hand.

Such one-handed operation mode may be implemented, for example, as a feature provided by an application system (e.g., a software application), and is therefore tied to specific systems and software stacks on which similar application systems are supported. That is, the application is designed to specifically execute the one-handed operation mode. If the application system is not specifically designed to execute one-handed operation mode, then the device cannot be operated in the one-handed mode. For example, in the case of a smartphone, one application (e.g., an email application) may support the one-handed operation while another application (e.g., a web browser application) may not support the one-handed operation. Therefore, it can be cumbersome to the user to know which applications of the device support one-handed operation. In other systems, the one-handed operation mode may be implemented as a feature embedded within an Operating System (OS) software, in which case any application that is running on the device may benefit from the touch-in-touch functionality.

Relying on the application systems or the OS to provide flexible touch windows on a touch-screen display may not be practical. When a touch-screen display is not affixed to just one application system (e.g., a display that has built-in picture-in-picture capability and coupled with multiple application systems), an application like the one explained above may not function in all circumstances as the display panel may receive images from multiple application systems and may have a picture-in-picture mode enabled within the display, in which none of the application systems are aware of.

Embodiments of the present invention may therefore operate to provide touch functionality analogous to picture-in-picture integrated within a display apparatus that provides the flexibility of touch operations within a sub-area of the touch screen and is agnostic to application systems.

Hereinafter, example embodiments will be described in more detail with reference to the accompanying drawings, in which like reference numbers refer to like elements throughout. The present invention, however, may be embodied in various different forms, and should not be construed as being limited to only the illustrated embodiments herein. Rather, these embodiments are provided as examples so that this disclosure will be thorough and complete, and will fully convey some of the aspects and features of the present invention to those skilled in the art. Accordingly, processes, elements, and techniques that are not necessary to those having ordinary skill in the art for a complete understanding of the aspects and features of the present invention are not described with respect to some of the embodiments of the present invention. Unless otherwise noted, like reference numerals denote like elements throughout the attached drawings and the written description, and thus, descriptions thereof will not be repeated. In the drawings, the relative sizes of elements, layers, and regions may be exaggerated for clarity.

It will be understood that, although the terms "first," "second," "third," etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section described below could be termed a second element, component, region, layer or section, without departing from the spirit and scope of the present invention.

Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

It will be understood that when an element or layer is referred to as being "on," "connected to," or "coupled to" another element or layer, it can be directly on, connected to, or coupled to the other element or layer, or one or more intervening elements or layers may be present. However, when an element or layer is referred to as being "directly on," "directly connected to," or "directly coupled to" another element or layer, there are no intervening elements or layers present. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments only and is not intended to be limiting of the present invention. As used herein, the singular forms "a," "an," and "the" are intended to include the plural forms as well, unless the context clearly indicates otherwise. It will be further understood that the terms "comprises" and/or "comprising," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the present invention refers to "one or more embodiments of the present invention."

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

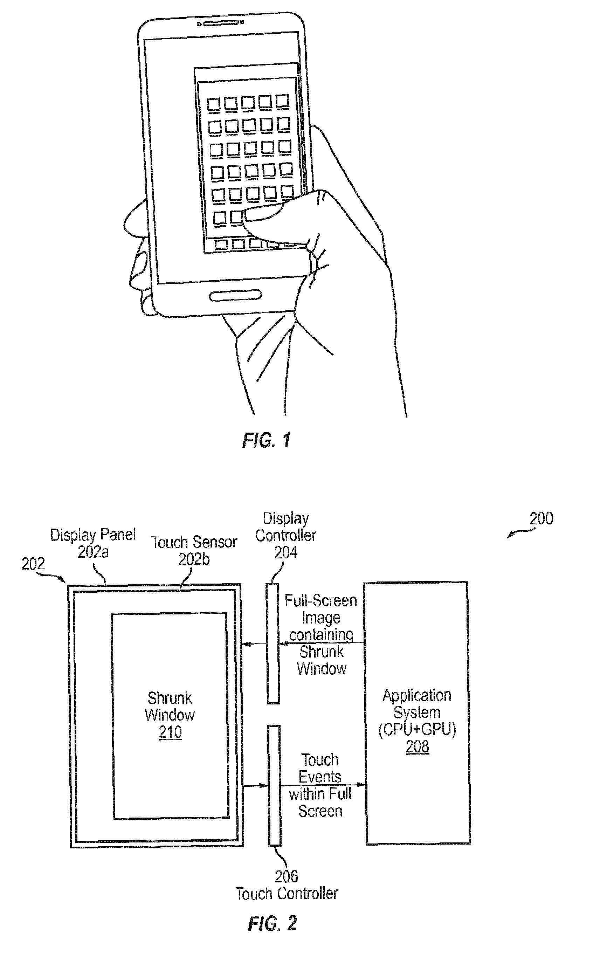

A touch sensor display panel can be operated by a user using either both hands or just one hand. With some of the larger size display panels (e.g., a diagonal display size of greater than 5.7 inches - although any size display can be a larger size display depending on the size of the user's hand), when a user performs one handed operation, it can be difficult for the user to reach the entire display area with one hand. For example, the user may hold a smartphone in one hand and want to operate it using just the one hand (e.g., with the hand that is holding the smartphone). However, the user's finger may not reach the entire display area because the size of the display panel may be too big. To overcome this issue, the size of the image that is displayed on the display panel can be reduced so that it does not occupy the entire display area. That is, the displayed image can be shrunk such that it occupies a sub-area of the entire display area of the display panel so that the user can reach all or most of the area of the displayed image in the sub-area with just one hand. FIG. 1 shows an example of a user holding a smartphone in one hand with the image displayed within a sub-area of the display panel. Furthermore, the user may move the smaller window to another position on the display for easier operation.

In such system, the image size is reduced by the application (e.g., software running on CPU + GPU) that provides the image to be displayed on the display panel. As such, the feature is tied to specific software systems. FIG. 2 shows a block diagram of a general architecture of a touch sensor display panel 202 with its associated application system 208 (display apparatus 200). A display controller 204 and a touch controller 206 are coupled between the application system 208 and the touch sensor display panel 202. The touch sensor display panel 202 comprises a display panel 202a and touch sensors 202b. When the image is to be displayed within a shrunk window 210 that is a sub-area of the display panel 202a, the application system 208 performs the resizing of the image, for example, by scaling the image. Thus, the application system 208 reduces the size of the image and provides that signal to the display controller 204, which, in turn provides the image to the display panel 202a.

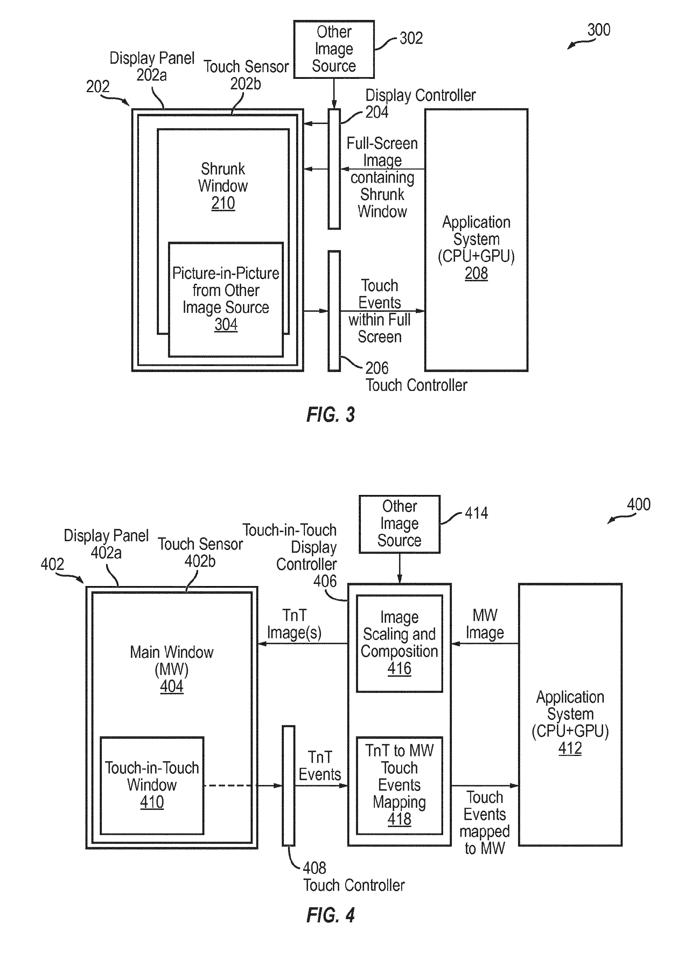

The described system may also be configured to display multiple images on the display panel from multiple application systems and/or image sources. For example, as illustrated with the display apparatus 300 in FIG. 3, a first image can be provided from an application system 208 to the display controller 204, and a second image can also be provided from some other image source 302 to the display controller 204. However, when this system is operated in a one-handed mode (e.g., by shrinking the images), the application system 208 reduces the size of the image before providing the image signal to the display controller 204. However, the other image source 302 may not necessarily have the capability or associated software to provide a shrunken image to the display controller 204. Furthermore, because the application system 208 and the other image source 302 are independent with respect to each other, the images displayed on the display panel 202a may conflict with each other. For example, the first image may overlap the second image.

When a touch-screen display is not dedicated to one particular application system, a software application like the above may not work well as the display itself may receive images from multiple application systems and/or image sources, and may have a picture-in-picture mode enabled within the display that none of the application systems is aware of, as illustrated in FIG. 3.

According to an embodiment of the present invention, touch operations within subwindows are integrated as native functionality (e.g., built-in to the hardware) in a display device, agnostic to any application system that may be coupled to the display device. Such touch displays can be shared by multiple applications that are hardwired or wirelessly coupled to multiple systems without the need to modify those application systems, thus improving display performance and power savings when compared to implementing such features in software.

FIG. 4 is a display apparatus 400 according to an embodiment of the present invention. According to the embodiment, the display apparatus 400 includes a display panel 402a collocated with a touch sensor 402b (i.e., collectively, display panel and touch sensor 402) and a touch sensor controller ("touch controller") 408. The touch sensor senses touch inputs and the touch controller 408 generates touch events corresponding to the touch inputs. The touch events that are generated by the touch controller can include information such as position and pressure data.

In some embodiments, the display apparatus 400 includes a touch-in-touch ("TnT") display controller 406 coupled with the display panel and touch sensor 402. The TnT display controller 406 is configured to receive image signals from an image source and provide the image signal to the display panel 402a. The TnT display controller 406 is also configured to receive touch events from the touch controller 408 and provide the touch events to an application system 412.

According to an embodiment, the TnT controller 406 is coupled between the display panel and touch sensor 402 and the application system 412. The application system 412 may be, for example, a software application that creates or provides an image that is to be displayed on the display panel 402a. Thus, the application system 412 generates an image, provides the image to the TnT display controller 406, and the TnT display controller 406 provides the image to the display panel 402a where the image is displayed for the user. Similarly, the touch sensor 402b and the touch controller 408 at the display panel 402a senses touch inputs by the user and provides the generated touch events to the TnT display controller 406. The TnT display controller 406 then provides the touch events to the application system 412 where it is processed accordingly. For example, in the case where the display apparatus is a smartphone, the touch event may be a command by the user to display (e.g., open) a picture. Thus, the user may touch an area of the display panel and touch sensor 402 corresponding to an icon that informs the application system 412 to open the picture. In response to the user's touch inputs, the application system 412 will open the picture, and provide the image signal to the display panel 402a via the TnT display controller 406. For these operations where the displayed image occupies the entire display panel 402a (e.g., main window 404), the touch events and the image signals pass through the TnT display controller 406 between the display panel and touch sensor 402 and the application system 412.

In some embodiments, the display apparatus 400 is operated in a touch-in-touch mode. In the TnT mode, the size of the image is reduced and displayed within a smaller TnT window 410 of the display panel 402a. Accordingly, the touch inputs sensed by the touch sensor 402b and the touch events generated by the touch controller 408 correspond to the TnT window 410 (e.g., shrunken image) of the display panel 402a.

In some embodiments, the application system 412 provides the image to be displayed on the display panel 402a in its full size format to the TnT display controller 406 and the TnT display controller 406 reduces the size of the image before providing the image signal to the display panel 402a. In some embodiments, the image processing module 416, which is a part of the TnT display controller 406, reduces the size of the image, for example, by scaling the image size and providing the scaled image signal to the TnT window 410 of the display panel 402a. Therefore, the application system 412 provides the same image signal whether the display apparatus 400 is operating in the TnT mode or the normal mode (e.g., full screen mode). Therefore, the ability of the display apparatus 400 to operate in the TnT mode is not dependent on the software capability of the application system 412.

In some embodiments, the display apparatus 400 is configured to display multiple images simultaneously from multiple sources. For example, a second image source 414 (e.g., a second application system, a USB input, an HDMI input) may be coupled to the TnT display controller 406 to provide an additional image. Therefore, in the normal mode, the TnT display controller 406 passes on the image signals from both the application system 412 and the second image source 414. However, in the TnT mode, the image processing module 416 of the TnT display controller 406 reduces the size of both the first image and the second image, and provides the reduced size images to the display panel 402a. Consequently, because the TnT display controller 406 resizes the images, the resizing of the two images is coordinated and they can be displayed in the TnT window without causing the images to conflict with each other at the display panel 402a.

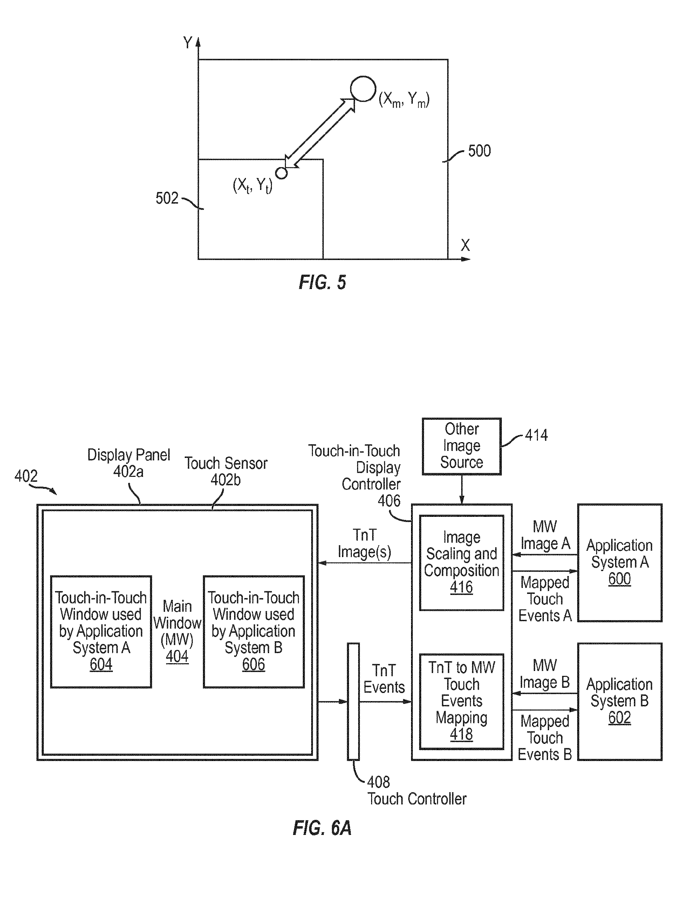

FIG. 5 illustrates an operation of the touch sensor 402b and the touch controller 408 of the display panel and display panel 402a with the TnT display controller 406 according to an embodiment of the present invention.

According to an embodiment, the TnT window 502 (e.g., the reduced size image 502) is a scaled image of the main window 500 (e.g., the entire display area of the display panel). Coordinates of the touch inputs that occur within the TnT window 502 are mapped into corresponding coordinates in the main window 500 (e.g., (xₜ, yₜ) of the TnT window 502 is mapped into (xₘ, yₘ) of the main window (500)). Similarly, image areas of the main window 500 are mapped into corresponding image areas in the TnT window (e.g., an image corresponding to the coordinates (xₘ, yₘ) is mapped into and displayed at the coordinate (xₜ, yₜ) of the TnT window 502.

In the normal mode (e.g., when the TnT mode is not enabled), the touch event that is generated by the touch controller 408 is passed through the TnT display controller 406 to the application system. When the TnT mode is enabled, the positions of touch inputs sensed within the TnT window are mapped to positions in the main window by the touch processing module 418 of the TnT display controller 406.

FIG. 6A shows an embodiment where the TnT display controller 406 is configured to generate multiple TnT windows and provide interfaces for coupling multiple application systems. For example, a first TnT window 604 is associated with a first application system 600 (shown as application system A in FIG. 6A) and a second TnT window 606 is associated with a second application system 602 (shown as application system B in FIG. 6A). Each of the first and second application systems 600, 602, is able to receive touch events from the touch sensor 402b and the touch controller 408, and produce images to be displayed according to the touch events. In such cases, the touch processing module 418 of the TnT display controller 406 maps (e.g., translates) the touch inputs sensed within the multiple TnT windows, respectively, to touch events expected by the corresponding application systems. The image processing module 416 receives images from the first and second application systems 600, 602, and renders the images to the corresponding first and second TnT windows 604, 606, respectively. In some embodiments, the transmitting of the mapped touch events to the corresponding application systems and the receiving of the images from corresponding application systems may be performed completely in parallel and unsynchronized with each other. For example, the mapped touch events may be transmitted to the application system while the display panel 402 receives the images concurrently from the application system. In such case, the TnT display controller 406 synchronizes the transmitting and receiving of the touch events and the images.

In some embodiments, the TnT display controller 406 prioritizes the two application systems equally by processing the touch events and the images according to the time they are received at the TnT display controller 406. In some embodiments, the TnT display controller 406 allocates and prioritizes the two application systems in a round-robin fashion, for example, in cases where touch events from multiple TnT windows arrive at the same time. In such cases, the two application systems perceive same processing metrics such as touch event response time and data throughput.

In some embodiments, the TnT display controller may prioritize the processing of touch events to and/or images from one application system over the other application system, such that one application system perceives the lower touch-event latency and/or higher data throughput than the other application system.

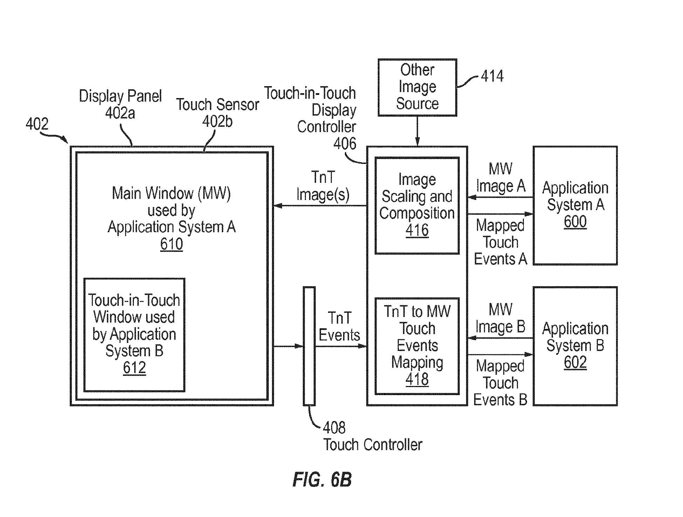

FIG. 6B shows an embodiment where a TnT display controller 406 is coupled to two application systems, where the TnT window 612 is used for just one of the two application systems and the main window 610 is used by the first application system.

In some embodiments, the TnT display controller 406 treats the first application system 600 and the second application system 602 differently. For example, touch events from the TnT window 612 are mapped to corresponding full size events by the TnT display controller 406 and provided to the second application system 602. Touch events that are generated from the main window 610 are provided to the first application system 600 without mapping by the TnT display controller 406. Similarly, images generated by the first application 600 system are provided to the main window 610 via the TnT display controller 406 without any resizing of the images, and the images generated by the second application system 602 are resized by the image processing module 416 of the TnT display controller 406 before being provided to the TnT window 612. Consequently, the images received from the two application systems, according to this embodiment, are composed in a picture-in-picture mode, together with any other images that may be received from other image sources 414.

In some embodiments, when multiple application systems are coupled to the TnT display controller 406 as shown in FIGS. 6A and 6B, the TnT display controller 406 may be configured to privately share the touch sensor display panel because the image composition and touch event mapping is performed in hardware by the TnT display controller 406, which provides isolation of image and the touch events of each individual application system when compared to software based composition.

In some embodiments, the mapping performed during the TnT mode is a scale conversion between two coordinate systems (e.g., the main window coordinate system corresponding to the full size of the display panel and the TnT window corresponding to the reduced size window of the display panel), which can be executed as bit shift operations in the hardware and therefore may not incur latency. In some embodiments, mapping the images includes performing a two-dimensional affine transformation, and mapping the touch events include performing an inverse affine transformation.

In some embodiments, the size and position of the sub-area (e.g., TnT window) is pre-determined and changeable by changing parameters of the display controller, similar to picture-in-picture. In some embodiments, the size and position of the sub-area may be determined automatically according to touch event data. In other embodiments, the sub-area may include control elements that allow a user to change the size and position of the sub-area.

In some embodiments, the touch sensor can have different sensitivity at different areas of the display panel. For example, a portion of the touch sensor that corresponds to the TnT window of the display panel can have a different sensitivity (e.g., higher sensitivity) than the main window of the display panel. In some embodiments, the sensitivity of the touch sensor can be changed automatically or manually by the user. For example, as the TnT window is moved from one location of the display panel to another location of the display panel, the sensitivity of the touch sensor changes to correspond with the TnT window. In some embodiments, the location of the touch sensor on the display panel can be fixed (e.g., fixed when the display and the touch sensor is manufactured) and the touch sensor may be located only at the portion of the display panel that corresponds to the TnT window.

Although the present invention has been described with reference to the example embodiments, those skilled in the art will recognize that various changes and modifications to the described embodiments may be performed, all without departing from the scope of the present invention. Furthermore, those skilled in the various arts will recognize that the present invention described herein will suggest solutions to other tasks and adaptations for other applications. It is the applicant's intention to cover by the claims herein, all such uses of the present invention, and those changes and modifications which could be made to the example embodiments of the present invention herein chosen for the purpose of disclosure, all without departing from the scope of the present invention. Thus, the example embodiments of the present invention should be considered in all respects as illustrative and not restrictive, with the scope of the present invention being indicated by the appended claims and their equivalents.

## Claims

1. A display apparatus (400) comprising:
a touch controller (408) configured to generate a touch event from a touch input, the touch event corresponding to a first coordinate system of a first window; and
a touch-in-touch (TnT) display controller (406) coupled with the touch controller (408) and configured to:
receive the touch event, and
map the touch event from the first coordinate system to a second coordinate system of a second window.

2. The apparatus of claim 1, wherein the TnT display controller (406) is further configured to:
receive a first image corresponding to the second coordinate system, and
map the first image from the second coordinate system to the first coordinate system.

3. The apparatus of claim 2, wherein the first image is received from an application system (412) coupled with the TnT display controller (406), and the TnT display controller (406) is further configured to:
receive a second image from an image source (414) corresponding to the second coordinate system, the image source (414) being coupled with the TnT display controller (406), and
provide the second image to the second window.

4. The apparatus of one of claims 2 or 3, wherein the mapping of the first image comprises a two-dimensional affine transformation, and the mapping of the touch event comprises an inverse affine transformation.

5. The apparatus of claim 4, wherein the two-dimensional affine transformation comprises two-dimensional scaling and translation.

6. The apparatus of one of claims 1 to 5, wherein the second window is a main window (404) and the first window is a TnT window (410) within the main window (404) of a display panel (402a).

7. The apparatus of claim 6, wherein the TnT display controller (406) is collocated with the display panel (402a).

8. The apparatus of one of claims 1 to 7, further comprising a touch sensor (402b) on a display panel (402a), a region of the touch sensor (402b) corresponding to the first window having higher sensitivity relative to the sensitivity of a region of the touch sensor (402b) corresponding to the second window.

9. A method for operating a display apparatus (400), the method comprising:
receiving, by a touch-in-touch (TnT) display controller (406), a touch event from a touch controller (408) coupled with the TnT display controller (406), the touch controller (408) being configured to generate the touch event from a touch input, the touch event corresponding to a first coordinate system of a first window;
mapping, by the TnT display controller (406), the touch event from the first coordinate system to a second coordinate system of a second window; and
providing the mapped touch event to an application system coupled with the TnT display controller (406).

10. The method of claim 9, further comprising:
receiving, by the TnT display controller (406), a first image corresponding to the second coordinate system; and
mapping the first image from the second coordinate system to the first coordinate system.

11. The method of claim 10, further comprising:
receiving, by the TnT display controller (406), a second image from an image source (414) corresponding to the second coordinate system, the image source (414) being coupled with the TnT display controller (406); and
providing, by the TnT display controller (406), the second image to the second window.

12. The method of one of claims 10 or 11, wherein the mapping the first image comprises a two-dimensional affine transformation, and the mapping of the touch event comprises an inverse affine transformation.

13. The method of claim 12, wherein the two-dimensional affine transformation comprises two-dimensional scaling and translation.

14. The method of one of claims 9 to 13, wherein the second window is a main window (404) and the first window is a TnT window (410) within the main window (404) of a display panel (402a).

15. The method of claim 14, wherein the TnT display controller (406) is collocated with the display panel (402a).

16. A display apparatus (400) comprising:
a touch controller (408) configured to:
generate a first touch event from a first touch input, the first touch event corresponding to a first coordinate system of a first window, and
generate a second touch event from a second touch input, the second touch event corresponding to a second coordinate system of a second window; and
a touch-in-touch (TnT) display controller (406) coupled with the touch controller (408) and configured to:
receive the first touch event and the second touch event,
map the first touch event from the first coordinate system to a third coordinate system of a third window, and
map the second touch event from the second coordinate system to the third coordinate system of the third window.

17. The apparatus of claim 16, wherein the TnT display controller (406) is further configured to:
receive a first image corresponding to the third coordinate system,
receive a second image corresponding to the third coordinate system,
map the first image from the third coordinate system to the first coordinate system, and
map the second image from the third coordinate system to the second coordinate system.

18. The apparatus of claim 17, wherein the first image is received from a first application system (600) coupled with the TnT display controller (406), and the second image is received from a second application system coupled (602) with the TnT display controller (406), the TnT display controller (406) being further configured to:
receive a third image from an image source (414) corresponding to the third coordinate system, the image source (414) being coupled with the TnT display controller (406), and
provide the third image to a third window.

19. The apparatus of claim 18, wherein the third window is a main window (404) of a display panel (402a) and the first window and the second window are sub-areas within the main window (404).

20. The apparatus of claim 19, wherein the TnT display controller (406) is collocated with the display panel (402a).

21. The apparatus of claim 20, wherein the TnT display controller (406) is further configured to prioritize the mapping of the first image and the second image based on the image that is first received by the TnT display controller (406).
